# EUROPEAN PATENT SPECIFICATION

(11) **EP 4 169 697 B1**
(45) Date of publication and mention of the grant of the patent: **04.12.2024**
(21) Application number: 22202656.9
(22) Date of filing: 20.10.2022
(51) Int. Cl.: B29C 51/46, B29C 51/42, B29C 51/10, B29C 51/18

(54) **THERMOFORMING METHOD AND SYSTEM**
THERMOFORMVORRICHTUNG UND VERFAHREN
DISPOSITIFS DE THERMOFORMAGE ET PROCÉDÉ

(30) Priority: 20.10.2021 IT 202100026990
(43) Date of publication of application: 26.04.2023
(73) Proprietor: C.M.S. S.p.A., 24019 Zogno (BG) (IT)
(72) Inventor: GAIAZZI, Fabio, 21040 Sumirago (VA) (IT); CARMINATI, Nicola, 24030 Paladina (BG) (IT)
(74) Representative: Luppi Intellectual Property S.r.l.

(56) References cited:
- EP-B1- 2 252 921
- DE-A1- 102012 005 179
- JP-A- 2018 518 408
- US-A1- 2002 062 161

## Description

### Background of the invention

The invention relates to a thermoforming method for controlling a thermoforming machine and a thermoforming system comprising the thermoforming machine.

In particular, the invention refers to a control method for controlling a thermoforming machine intended to process an article made of plastics, in particular an article made of thermoplastic material.

Thermoforming machines are known that are intended to thermoform a blank product made of thermoplastic material, for example in the form of a slab, sheet or film, to make a finished thermoformed product such as a suitcase shell, a part of a household appliance, an item of sporting equipment, a part of a vehicle, a bathtub and the like. Such thermoforming machines comprise one or more heating devices and forming means. The heating devices each comprise a plurality of heating elements, such as resistances, to heat and soften the blank product so as to set up the blank product to be formed as a finished product by suitable forming means.

The softened product, i.e. the intermediate product, can take on, according to circumstances, a substantially regular shape, for example similar to a half-bubble or half-ball, also called a "bubble" or a substantially irregular shape.

The shape of the intermediate product and the shape of the thermoformed product are a function of dimensions and of the material of the blank product and of shaping and temperature conditions applied to the product in processing.

One known thermoforming method comprises a setting step of setting a series of control parameters for controlling the thermoforming machine, i.e. a thermoforming "recipe", for controlling the heating devices and/or the forming means. The machine parameters comprise for example thermal power values supplied by the heating devices and/or the respective supplying time of this thermal power. The setting step is performed by a specialized operator who on the basis of his or her experience programs the thermoforming machine.

Nevertheless, owing to the multiple variables involved in the processing, the definitive control parameters are achieved after a series of production tests which result in rejects. US2002062161A1**,** EP2252921A1**, and** DE102012005179A1 **disclose thermoforming methods for controlling a thermoforming machine.**

One drawback of the known thermoforming method is the fact of long setting times for the thermoforming machine.

One defect of the known thermoforming method is that in order to run a thermoforming machine efficiently, specialized personnel must be available.

One defect of the thermoforming method disclosed above is that it is unable to ensure over time satisfactory quality stability of production.

### Summary of the invention

One object of the present invention is to improve thermoforming methods for controlling a thermoforming machine.

One object is to provide a thermoforming method for controlling a thermoforming machine that is effective regardless of the experience of the operator.

One object is to provide a thermoforming method for controlling a thermoforming machine that enables the qualitative stability of production to be improved with respect to known methods.

One object is to improve a thermoforming system comprising a thermoforming machine.

One object is to optimize processing of an article to be thermoformed on the basis of a through estimate of the control parameters and of continuous monitoring of the article being processed.

One advantage is to obtain simply a thermoformed article of quality by selecting a reduced number of start parameters.

A further advantage is considering environmental variables to calculate accurately the control parameters of the thermoforming machine.

Such objects and advantages and still others are achieved by a thermoforming method for controlling a thermoforming machine and by a thermoforming system comprising the thermoforming machine, as disclosed in one or more of the claims set out below.

In one embodiment according to the invention, a thermoforming method for controlling a thermoforming machine for processing an article made of thermoplastic material comprises: setting at least one start parameter, the start parameter comprising a parameter that is related to the processing of the article; estimating at least one operating parameter of the thermoforming method on the basis of the at least one start parameter; calculating at least one control parameter to control the thermoforming machine on the basis of the operating parameter; detecting at least one actual parameter of the thermoforming method; comparing the at least one actual parameter detected with the at least one operating parameter; on the basis of the comparing, modifying the at least one control parameter; wherein detecting, comparing and modifying are in a cyclical sequence.

### Brief description of the drawings

The invention can be better understood and actuated with reference to the attached drawings that illustrate an embodiment thereof by way of non-limiting example, in which:
- Figure 1 is a block diagram that illustrates a thermoforming method according to the invention;
- Figure 2 is a further block diagram that shows the thermoforming method according to the invention;
- Figure 3 is a perspective view of a thermoforming machine of the present invention that implements the method illustrated in Figure 1 and in Figure 2, in a heating step in which an article is shown that is made of thermoplastic material that comprises a blank product;
- Figure 4 is a raised view of the thermoforming machine of Figure 3, in which heating devices are illustrated provided with a plurality of heating elements;
- Figure 5 is a perspective view of the thermoforming machine of Figure 3 that shows a pressure shaping step of pressure shaping the article, in which the article comprises an intermediate product;
- Figure 6 is a perspective view of the thermoforming machine of Figure 3 that shows a shaping under vacuum step of shaping under vacuum the intermediate product of Figure 5 for producing a thermoformed product;
- Figure 7 is a schematic plan view of a part of a thermoforming system of the present invention in which the thermoforming machine in a work environment, a database, a user terminal device and sensor means are shown.

### Detailed description

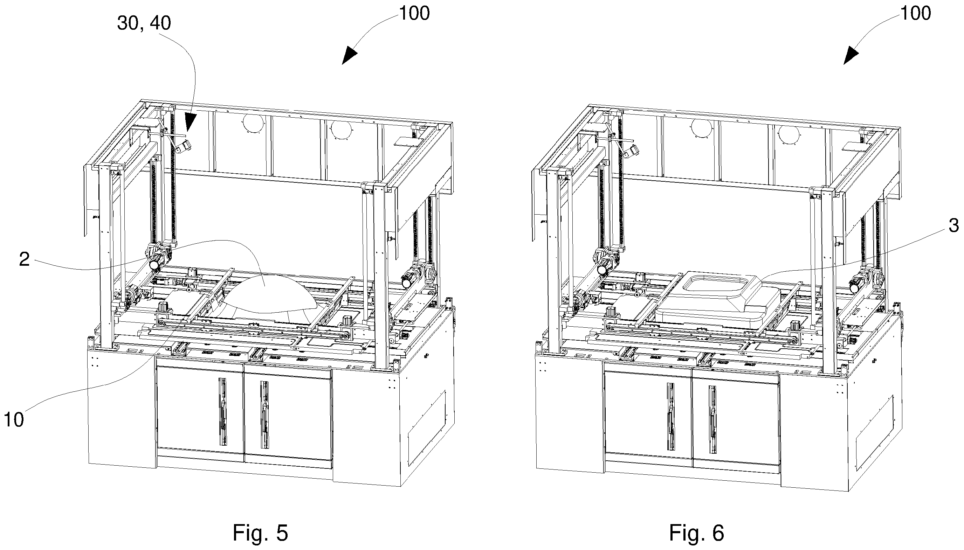

With reference to the attached figures, with numeric reference 100 a thermoforming machine is indicated that is arranged for thermoforming an article 1, 2, 3 made of thermoplastic material. The article 1, 2, 3, comprises a blank product 1, for example in the form of a slab, sheet or film, or an intermediate product 2, a so-called "bubble", or a thermoformed product 3, i.e. a finished product, also known as a drawn product, like for example a suitcase shell, an item of sporting equipment, a tank, a vehicle part, a part of a household appliance and the like. In the specific embodiment shown in the figures, the intermediate product 2 is obtained in a pressure shaping step of pressure shaping of the heated blank product 1 (Figure 5), whereas the thermoformed product 3 is obtained in a shaping under vacuum step of shaping under vacuum the intermediate product 2 (Figure 6).

A slab or sheet is a body that has two prevalent dimensions with respect to the third and which is bounded by two opposite surfaces situated at a reciprocal distance, for example the thickness of the slab or sheet, which is relatively small.

The article 1, 2, 3 may be virtually divided into a plurality of areas. Each area, during processing, i.e. during the application of the thermoforming method, is associated with an operating parameter of the thermoforming method, i.e. with a start parameter P1 and/or with an operating parameter P2 and/or with a control parameter P3 and/or with an actual parameter PR which will be disclosed below. As, as mentioned, the article 1, 2, 3 is transformed in the steps of the thermoforming method, this area may not maintain the same shape during processing. Nevertheless, the skilled person will have no difficulty understanding which area of the article 1, 2, 3 is being referred to each time.

The thermoforming machine 100 may be a numerical control machine.

The thermoforming machine 100 is included in a thermoforming system disclosed below.

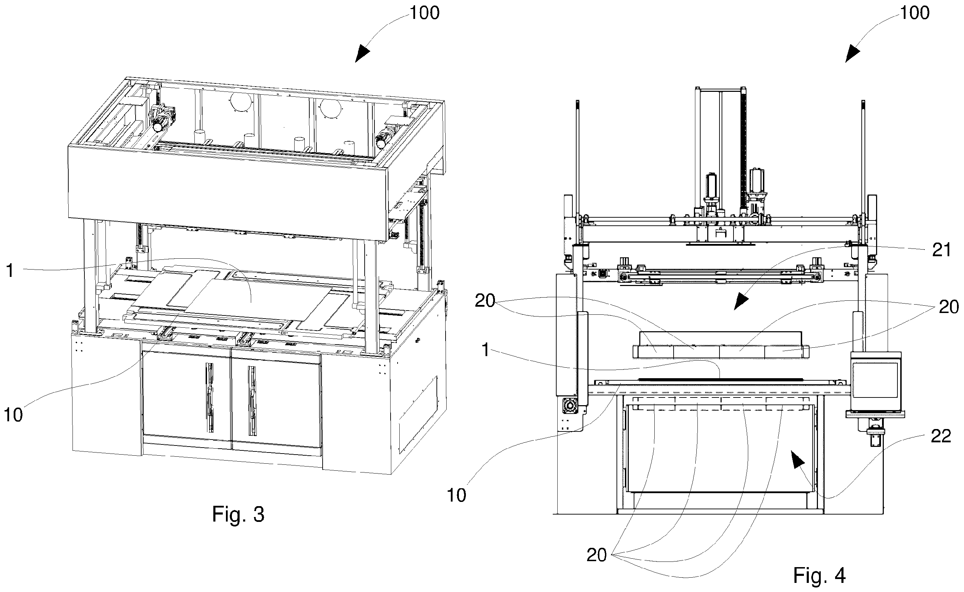

The thermoforming machine 100 may comprise, in particular, on a support frame, a support plane 10 for supporting the blank product 1, for example for supporting the blank product 1 in a horizontal position (Figures 3, 4 and 5).

The thermoforming machine 100 comprises controllable forming means for forming the article 1, 2, 3. Such forming means comprises a forming mould, for example positioned below the support plane 10. On the forming mould, a contact surface is obtained that is intended to come into contact with the intermediate product 2 to be formed. The contact surface is arranged for imprinting the shape thereof on the intermediate product 2. The forming mould may be movable with respect to the support plane 10 approaching and/or moving away from the article 1, 2, 3.

The thermoforming machine 100 comprises at least one heating device 21, 22 facing a surface of the article 1, 2, 3 and arranged, in use, for heating this surface of the article 1, 2, 3. In particular, with reference to Figure 4, the thermoforming machine 100 comprises an upper heating device 21 and a lower heating device 22, where upper and lower refer to the position of the article 1, 2, 3 on the support plane 10. The upper heating device 21 and the lower heating device 22 are shown schematically in Figure 4, and are movable towards/away from one another to heat, in particular soften, the article 1, 2, 3.

The upper 21 and lower 22 heating devices each comprise a plurality of respective heating elements 20, shown schematically in the form of rectangles in Figure 4, for example comprising resistances, in particular quartz or ceramic or halogen resistances.

In particular, in use, each heating element 20 is controllable for heating, in a heating step, the corresponding area of the article 1, 2, 3 facing each heating element 20.

The forming means comprises fluid supplying means, which is not illustrated, which is controllable to supply a fluid on the article 1, 2, 3, in particular on the heated blank product 1. The fluid supplying means is connectable, in use to a compressed fluid supplying device and comprises one or more shaped nozzles to be traversed by a fluid, for example air. The fluid supplying means is positioned below the article 1, 2, 3 to be thermoformed.

The forming means further comprises suction means, which is not illustrated, which is controllable to generate a vacuum between the intermediate product 2 and the contact surface of the forming mould to make the article 1, 2, 3 adhere to the contact surface. The suction means is connected to a device for generating a vacuum, such as a vacuum pump. The suction means comprises one or more further shaped nozzles to be traversed by a fluid, for example air. The suction means is positioned below the article 1, 2, 3 to be thermoformed.

In an alternative embodiment, the thermoforming machine comprises supplying/suction means provided with the same nozzles alternately connected to the compressed fluid supplying device and to the device for generating the vacuum, to dispense the compressed fluid and to generate the vacuum on the article 1, 2, 3.

The thermoforming machine 100 comprises detecting means 30, 40 configured for detecting the at least one actual parameter PR (Figure 5). The at least one actual parameter PR comprises, in particular, an actual temperature value TR detected on the area of the article 1, 2, 3. The detecting means 30, 40 comprises, in particular, temperature 30 detecting means for measuring the actual temperature value TR. The temperature 30 detecting means may comprise a thermographic camera or other contactless temperature detecting means of the infrared radiation type. The actual temperature value TR may be included in a matrix of detected actual temperature values, wherein each element of the matrix is associated with a respective area of the article 1, 2, 3.

In addition or alternatively to the actual temperature value TR, the at least one actual parameter PR may comprise an actual position X of a point of the article 1, 2, 3.

The detecting means 30, 40 comprises, in particular, position detecting means 40 for measuring an actual position X. The position detecting means 30 may comprise a depth camera or video camera or other contactless means for detecting position by laser or stereoscopy. The actual position X may be included in a matrix of actual detected positions, in which each element of this matrix is associated with a respective point of the article 1, 2, 3.

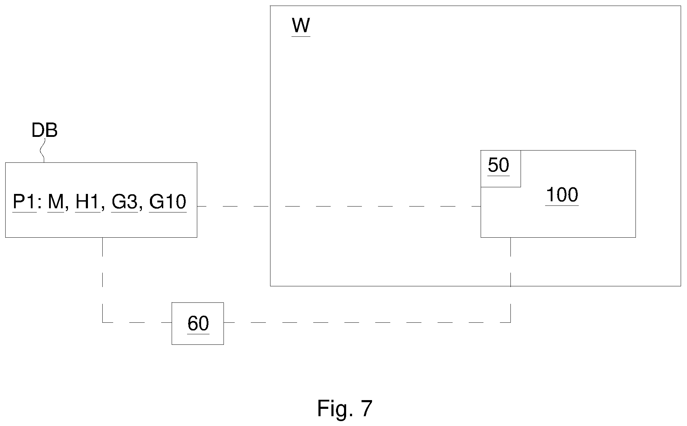

The thermoforming system comprises sensor means 50 configured for detecting at least one environmental parameter in a work environment W in which the thermoforming machine 100 is located (Figure 7). The work environment may comprise a room or an industrial shed.

The at least one environmental parameter comprises, in particular, an ambient temperature value of the work environment W. The sensor means 50 comprises, in particular, a temperature probe, like a thermocouple, to detect the ambient temperature value.

In addition or alternatively to the ambient temperature value, the at least one environmental parameter may comprise an ambient humidity value, in particular a relative humidity value, of the work environment W, in particular of the air of the work environment W. The sensor means 50 comprises, in particular, a humidity detector, such as a hygrometer, to detect the ambient humidity value.

The thermoforming system comprises a database DB configured for storing the at least one start parameter P1 relative to the processing of the article 1, 2 3. The database DB is connected to the thermoforming machine 100 (Figure 7). The database DB may be connected to the thermoforming machine 100 by a cabled connection, or in wireless mode. The database DB may comprise a remote Cloud server connected to the thermoforming machine by an Internet network. In particular, the at least one start parameter P1 comprises at least one product parameter, relating to chemical-physical and/or dimensional properties of the article, and at least one machine parameter, relating to the geometry of one or more components of the thermoforming machine 100.

The product parameter may comprise a material M of the article 1, 2, 3, which may be selected from materials including at least one thermoplastic polymer.

The product parameter may comprise a dimension H1 of the blank product 1 to be processed, for example the thickness of the slab to be thermoformed. In a further embodiment, in addition or alternatively to the thickness, the dimension H1 of the blank product 1 may comprise a width and/or a length of the slab to be thermoformed.

In addition or alternatively to the material M and/or to the dimension H1, the product parameter P11 may comprise a desired final geometry G3 of the thermoformed product 3, i.e. a shape of the finished product that it is desired to produce by the thermoforming method. The desired final geometry G3 may be defined by a matrix or by one or more vectors containing geometric parameters, for example spatial coordinates of a series of desired positions of points of the desired thermoformed product. The desired final geometry G3 can be stored in an electronic memory, in a three-dimensional drawing document, or solid model, or CAD 3D.

The at least one machine parameter P12 comprises a mould shape G10, i.e. a geometry of the shaped contact surface to imprint the shape thereof on the article 1, 2, 3, in particular on the intermediate product 2 to obtain the thermoformed product 3. The mould shape G10 can be defined by a matrix or by one or more vectors containing geometric parameters, for example spatial coordinates of a series of points. The mould shape G10 can be stored in an electronic memory, in a three-dimensional drawing document, or solid model, or CAD 3D.

The database DB can include a finished product database comprising at least two desired final geometries G3 of the thermoformed product 3. The database DB includes at least two mould shapes G10 to imprint on the article 1, 2, 3. In particular, the database DB can comprise hundreds of desired final geometries G3 and hundreds of mould shapes G10.

The database DB can include a blank product database comprising at least two materials M of the article 1, 2, 3 and/or at least two dimensions H1 of the blank product 1. In particular, the database DB can comprise hundreds of materials M and/or hundreds of dimensions H1.

The thermoforming system comprises, in particular, a user terminal device 60 connected to the database DB and to the thermoforming machine 100 and configured to permit an operator of the thermoforming machine 100 to select the at least one start parameter P1. The user terminal device 60 can be provided with a human machine interface (HMI) that enables the operator to interact both with the documents stored in the database DB and with the thermoforming machine 100 (Figure 7). The user terminal device 60 can further be configured to display and permit continuous monitoring of the at least one operating parameter P2, of the at least one control parameter P3, of the at least one parameter of actual PR and of the at least one environmental parameter. The user terminal device 60 can be connected to the database DB and/or to the thermoforming machine 100 by a cabled or wireless connection. The user terminal device 60 can comprise a desktop PC and/or wearable devices and/or movable devices.

The thermoforming machine 100 comprises control means, which is not illustrated, configured for controlling by the at least one control parameter P3 the plurality of heating elements 20 and/or the forming means, as disclosed below. The control means can comprise a programmable logic controller (PLC).

The thermoforming machine 100 comprises calculating means, which is not illustrated, configured for: estimating the at least one operating parameter P2 on the basis of the at least one start parameter P1; calculating the at least one control parameter P3 on the basis of the operating parameter P2 and comparing the at least one actual parameter PR detected with the at least one operating parameter; and on the basis of the comparison modifying the at least one control parameter P3. In other words, the calculating means is configured for performing a simulation based on the start parameter P1 that provides as a result an operating parameter P2 and a control parameter P3 and for correcting this result on the basis of at least one incoming actual parameter PR. The calculating means is further configured for modifying further the least one control parameter P3 on the basis of the at least one environmental parameter. The calculating means can comprise a computer, or a laptop, or a similar device provided with a processor (CPU). The at least one operating parameter P2 and the at least one control parameter P3 will be disclosed below in the description. The calculating means is connected in a cabled or wireless manner to the thermoforming machine 100, to the user terminal device and to the database DB.

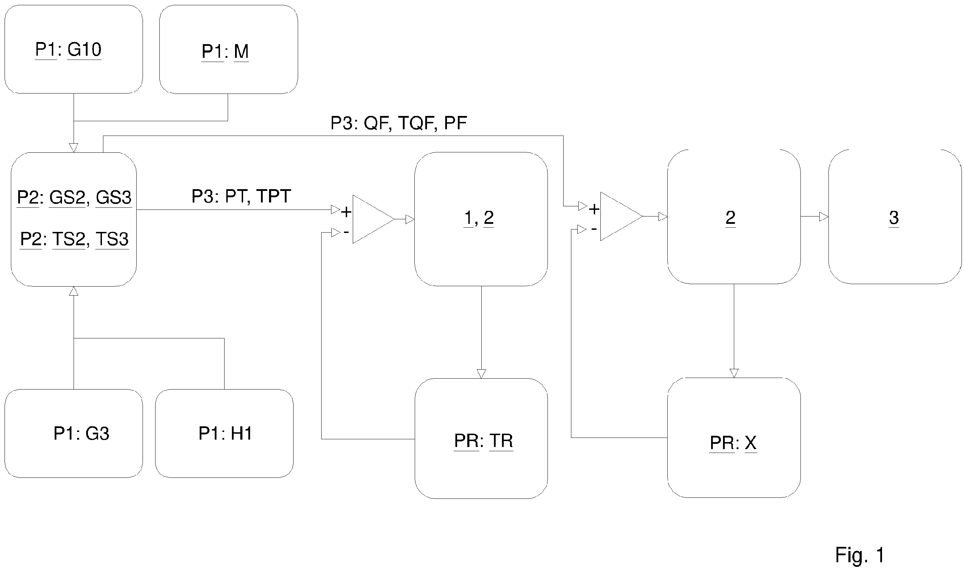

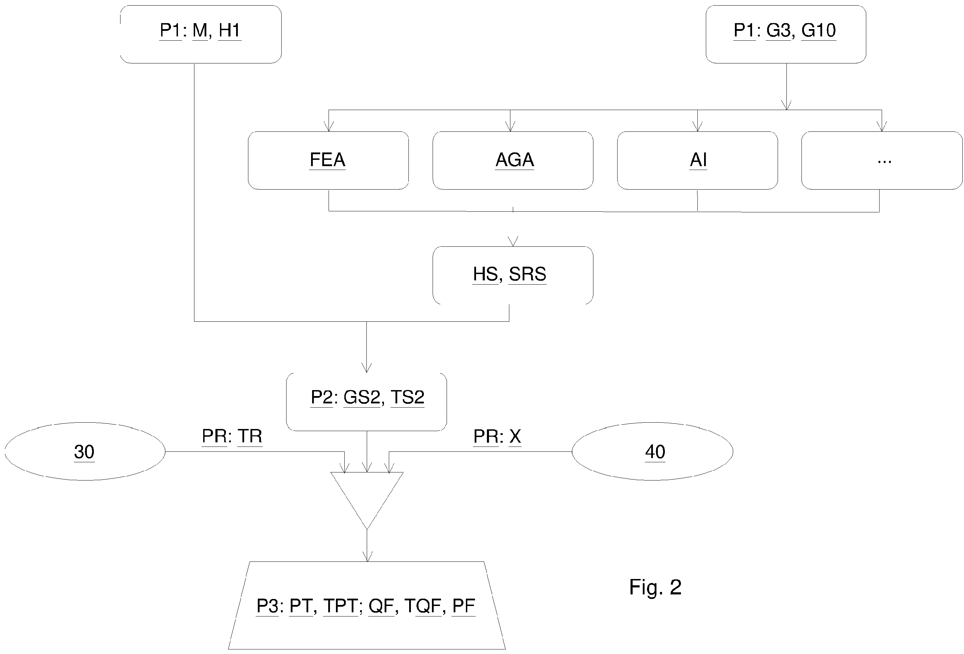

Such a thermoforming system can implement the thermoforming method disclosed below (Figures 1 and 2).

The thermoforming method for controlling the thermoforming machine 100 for processing the article 1, 2, 3 comprises a setting step of setting the at least one start parameter P1. This setting step can be performed by the operator by selecting the at least one start parameter P1 by the user terminal device 60.

The thermoforming method comprises an estimating step of estimating the at least one operating parameter P2 of the thermoforming method on the basis of the at least one start parameter P1. The at least one operating parameter P2 is an "initial" parameter, i.e. a first setting parameter of the thermoforming method, deriving from a simulation based on a numeric model having as an input variable the at least one start parameter P1.

With reference to Figure 2, the simulation can comprise a structural analysis of the finished elements FEA and/or an analytical geometry analysis AGA performed on structural and/or geometrical parameters of the article 1, 2, 3. Further, the simulation can be further implemented con the application of neural and artificial intelligence AI networks configured for learning from experience and from preceding simulations - stored for example in the database DB - i.e. from preceding operating parameters P2 and/or preceding control parameters P3 obtained with the same and/or similar start parameters P1. The simulation can consider the shaping induced by the mould geometry G10. The results of this simulation are a distribution of the thickness HS of the simulated intermediate product, the respective stretching coefficient SRS and the shape or geometry of the intermediate product 2, i.e. a simulated geometry GS2.

The at least one operating parameter P2 comprises the simulated intermediate geometry GS2 of the intermediate product 2 and a respective simulated temperature distribution TS2 applicable to the blank product 1 to obtain the simulated intermediate geometry GS2. The simulated geometry GS2 comprises a series of simulated positions of respective points of the simulated intermediate product. In other words, the step of estimating comprises predicting the simulated temperature TS2 distribution that has to be reached on the blank product 1 to obtain the intermediate product 2 starting from the at least one start parameter P1.

The simulated temperature TS2 distribution comprises at least one simulated temperature value associated with the area of the blank product 1 and/or of the intermediate product 2. In particular, the simulated temperature TS2 distribution comprises a thermal matrix of simulated local temperatures, each element of this thermal matrix carries information on the temperature that the specific area of the blank product 1 and/or of the intermediate product 2 has to reach.

The thermoforming method comprises a calculating step of calculating the at least one control parameter P3 to control the thermoforming machine 100 on the basis of the at least one operating parameter P2.

In particular, the at least one control parameter P3 is used to control the plurality of heating elements 20 and the forming means.

The thermoforming method comprises a detecting step of detecting at least one actual parameter PR of the thermoforming method and a comparing step of comparing the at least one actual parameter PR with the at least one operating parameter P2. On the basis of the comparing step, a modifying step of modifying the at least one control parameter P3 is performed. The detecting, comparing and modifying steps are in a cyclical sequence. In other words, these steps are repeated one after another in the described order. These steps are conducted in particular continuously.

In other words, in a start step of starting the thermoforming machine 100, the at least one control parameter P3 is based on the at least one operating parameter P2, thus on parameters deriving from the simulation; after the start step, continuous monitoring starts on the thermoforming method (in particular, the step of detecting the at least one actual parameter PR) and a feedback operating mode in which the control parameter P3 is corrected on the basis of an actual/detected parameter measured on the article 1, 2, 3, i.e. on the basis of the at least one actual parameter PR.

The thermoforming method comprises a heating step of heating the article 1, 2, 3 (Figures 3 and 4). The heating step is used to soften the article 1, 2, 3, in particular the blank product 1, to set up the article 1, 2, 3 for a subsequent moulding step. The moulding step comprises the pressure shaping step and/or the step of shaping under vacuum.

The at least one control parameter P3 comprises at least one thermal power value PT to be supplied to the area of the article 1, 2, 3 and/or a heating time TPT. The heating time TPT is the time period in which the thermal power PT is supplied on the area of the article 1, 2, 3. The thermal power value PT and/or the heating time TPT can control the plurality of heating elements 20. A respective thermal power value PT and/or a respective heating time TPT is associated with each heating element 20. In the heating step, the thermal power value PT and/or the heating time TPT are modified on the basis of the at least one actual temperature TR detected on the area of the article 1, 2, 3. In particular, the thermal power value PT is compared by a law that links the thermal power to be supplied to the temperature of the article 1, 2, 3, to the at least one actual temperature value TR.

The pressure shaping step for pressure shaping the article 1, 2, 3 is performed by supplying onto the article 1, 2, 3 a pressurized fluid (Figure 5). The pressure shaping step is used to give the article 1, 2, 3, a suitable shape, in particular a concave shape, upon insertion of the mould so as to even out the distribution of the stresses and/or the thickness in the article 1, 2, 3. As mentioned, in the pressure shaping step the intermediate product 2 is obtained. The pressure shaping step is thus subsequent to the heating step.

The at least one control parameter P3 comprises at least one fluid flow rate value QF to be supplied to the article 1, 2, 3 and/or a supplying time TQF and/or a fluid pressure PF. The supplying time TQF is the time period in which the fluid flowrate is supplied onto the article 1, 2, 3. The fluid flow rate value QF and/or the supplying time TQF and/or the fluid pressure PF can control the fluid supplying means. In the pressure shaping step, the fluid flow rate value QF and/or the supplying time TQF and/or the fluid pressure PF can be modified on the basis of the actual position X of the point of the article 1, 2, 3. In the pressure shaping step, the actual position X detected on the article 1, 2, 3 is compared with the respective simulated position contained in the simulated intermediate geometry GS2.

The step of shaping under vacuum the article 1, 2, 3 is performed by making the article 1, 2, 3 adhere to the contact surface of the forming mould (Figure 6).

The step of shaping under vacuum is used to confer on the article 1, 2, 3 the finished shape of the thermoformed product 3. In the specific embodiment, the step of shaping under vacuum is performed on the intermediate product 2 and is thus subsequent to the pressure shaping step.

The at least one control parameter P3 comprises at least one vacuum value to be applied to the article 1, 2, 3 and/or a vacuum time. The vacuum time is the time period in which the vacuum on the article 1, 2, 3 is generated. The vacuum value and/or the vacuum time can control the suction means. In the pressure shaping step, the vacuum value and/or the vacuum time can be modified on the basis of the at least one actual position X of the point of the article 1, 2, 3. In the step of shaping under vacuum, the actual position X detected on the article 1, 2, 3 is compared with the respective desired position contained in the desired final geometry G3.

The thermoforming method comprises a detecting step of detecting at least one environmental parameter in the work environment W where the thermoforming machine 100 is located.

On the basis of the at least one environmental parameter, a step is provided of further modifying the at least one control parameter P3. This enables during processing, the environmental conditions of the work environment W to be taken into account, which can differ on the basis of the climatic zone in which the thermoforming machine 100 is installed and/or the time of year and/or during the solar day and/or other energy variables relating to the work environment W.

The step of further modifying the at least one control parameter P3 on the basis of the at least one environmental parameter can precede the step of detecting the actual parameter PR. In particular, the ambient temperature value and/or the ambient humidity value can be used to set the thermal detecting means, in particular in the case of infrared thermal detecting means for correcting or setting an actual temperature value detected on the blank product 1 before being heated. Alternatively, the step of further modifying the at least one control parameter P3 can be run during one of the detecting, comparing and modifying steps.

In particular, the ambient humidity value can be used to correct a thermal power value PT (and/or a heating time TPT) taking account of the heat exchange between the plurality of heating elements 20 and the air that surrounds the article 1, 2, 3 to be heated.

Additionally or alternatively to the step of further modifying the at least one control parameter P3 on the basis of the at least one environmental parameter, the aforesaid step of estimating the at least one operating parameter P2 on the basis of the at least one start parameter P1 can further comprise modifying the at least one operating parameter P2 on the basis of the at least one environmental parameter. In other words, the simulation can have as input parameters the ambient humidity value and the ambient temperature value for estimating with greater precision - with respect to the step of estimating the at least one operating parameter P2 on the basis of the at least one start parameter P1 - the distribution of intermediate temperatures TS2 (and the respective simulated intermediate geometry GS2).

It should be noted how, by applying the thermoforming method according to the invention, it is not necessary to dispose of expert personnel to minimize the production time of the thermoformed product.

Owing to the detection of the actual parameters of the thermoforming method, and the implementation with the simulation/estimate of the initial operating parameters the optimum process conditions can be reached in a short time.

Further, implementing the simulation and feedback control enables the quality of production to be maintained virtually constant, ensuring at the same time the reproducibility of the process parameters.

Further, considering environmental variables as input variables to calculate the control parameters of the thermoforming method permits great flexibility of the thermoforming machine in any work environment, reducing the time of installation and setting of the thermoforming machine.

This naturally reduces the number of rejects with resulting reduction of production costs.

## Claims

1. Thermoforming method for controlling a thermoforming machine (100) for processing an article (1, 2, 3) in thermoplastic material, said method comprising:
a. setting at least one start parameter (P1), said at least one start parameter (P1) comprising at least one parameter which is related to processing said article (1, 2, 3), wherein said article (1, 2, 3) comprises a blank product (1) and/or an intermediate product (2) and/or a thermoformed product (3);
b. estimating at least one operative parameter (P2) of said thermoforming method based on said at least one start parameter (P1);
c. calculating at least one control parameter (P3) for controlling said thermoforming machine (100) based on said at least one operative parameter (P2);
d. detecting at least one actual parameter (PR) of said thermoforming method;
e. comparing said at least one actual parameter (PR) which has been detected with said at least one operative parameter (P2) which has been estimated;
f. based on said comparing, modifying said at least one control parameter (P3);
wherein said detecting, said comparing and said modifying are in a cyclical sequence;
**characterized in that said at least one start parameter (P1) comprises at least one machine parameter and said at least one machine parameter comprises a mould shape (G10) to imprint on said intermediate product (2).**

2. Thermoforming method according to claim 1, wherein said at least one start parameter (P1) comprises at least one article parameter.

3. Thermoforming method according to claim 2, wherein said at least one article parameter comprises a desired final geometry (G3) of said thermoformed article (3) and/or a material (M) of said article (1, 2, 3) and/or at least one dimension (H1) of said blank product (1); said thermoforming method comprising, in particular, a step of providing a database (DB) configured to save said at least one start parameter (P1) including at least two final desired geometries (G3) of said thermoformed product (3) and/or at least two mould shapes (G10) to imprint on said intermediate article (2) and/or at least two materials (M) of said article (1, 2, 3) and/or at least two dimensions (H1) of said blank product (1); said thermoforming method comprising, in particular, a step of connecting said database (DB) to said thermoforming machine (100), said database (DB) comprising a remote server cloud connected to said thermoforming machine (100) by means of an Internet network.

4. Thermoforming method according to any one of the preceding claims, wherein said step of setting comprises a step of selecting said at least one start parameter (P1) through a user terminal device (60).

5. Thermoforming method according to any one of the preceding claims, wherein said at least one operative parameter (P2) comprises a simulated intermediate geometry (GS2) of said intermediate product (2) and a respective simulated temperature distribution (TS2) applicable to said blank product (1) to achieve said simulated intermediate geometry (GS2), said simulated temperature distribution (TS2) comprising at least one simulated temperature value which is associated with an area of said blank product (1) and/or said intermediate product (2).

6. Thermoforming method according to any one of the preceding claims, comprising detecting at least one environmental parameter in a work environment (W) where said thermoforming machine (100) is located, and further modifying said at least one control parameter (P3) based on said at least one environmental parameter.

7. Thermoforming method according to claim 6, wherein said at least one environmental parameter comprises an environmental temperature value and/or a humidity value of said work environment (W).

8. Thermoforming method according to any one of the preceding claims, comprising a step of heating said article (1, 2, 3), said at least one control parameter (P3) comprising a thermal power value (PT) to supply on an area of said article (1, 2, 3) and/or a heating time (TPT), said at least one actual parameter (PR) comprising an actual temperature value (TR) detected on said area.

9. Thermoforming method according to any one of the preceding claims, comprising a step of shaping under pressure said article (1, 2, 3) by supplying a pressurised fluid on said article (1, 2, 3), said at least one control parameter (P3) comprising a fluid flowrate value (QF) to supply on said article (1, 2, 3) and/or a supplying time (TQF) and/or a fluid pressure value (PF), said at least one actual parameter (PR) comprising an actual position (X) of a point of said article (1, 2, 3).

10. Thermoforming method according to any one of the preceding claims, comprising shaping under vacuum said article (1, 2, 3) by making said article (1, 2, 3) adhere to a contact surface of said thermoforming machine (100), said at least one control parameter (P3) comprising a vacuum value to apply on said article (1, 2, 3) and/or a vacuum time, said at least one actual parameter (PR) comprising an actual position (X) of a point of said article (1, 2, 3).

11. Thermoforming system for producing an article (1, 2, 3) in thermoplastic material, wherein said article (1, 2, 3) comprises a blank article (1) and/or an intermediate product (2) and/or a thermoformed product (3); said thermoforming system comprising a thermoforming machine (100) arranged for processing said article (1, 2, 3), including:
- a plurality of heating elements (20), each of which being controllable to heat an area of said article (1, 2, 3);
- forming means controllable to form said article (1, 2, 3) which has been heated;
- detecting means (30, 40) configured for detecting at least one actual parameter (PR) of said article (1, 2, 3);
- control means configured for controlling said plurality of heating elements (20) and/or said forming means through at least one control parameter (P3);
- calculating means configured for estimating at least one operative parameter (P2) based on at least one start parameter (P1), calculating said at least one control parameter (P3) based on said at least one operative parameter (P2) which has been estimated, comparing said at least one actual parameter (PR) which has been detected with said at least one operative parameter (P2) and modifying said at least one control parameter (P3) based on said comparing;
**characterized by comprising a database (DB)** connected to the thermoforming machine (100), the database (DB) being **configured to save at least start parameter (P1) including at least two mould shapes (G10) to imprint on said article (1, 2, 3).**

12. Thermoforming system according to claim 11, and comprising sensor means (50) configured for detecting at least one environmental parameter in a work environment (W) where said thermoforming machine (100) is located and said calculating means is further configured for further modifying said at least one control parameter (P3) based on said at least one environmental parameter.

13. Thermoforming system according to claim 12, wherein said sensor means (50) comprises a temperature probe and/or a humidity detector.

14. Thermoforming system according to any one of claims 11 to 13, comprising a database (DB) configured to save said at least one start parameter (P1) including at least two desired geometries (G3) of said thermoformed product (3) and/or at least two materials (M) of said article (1, 2, 3) and/or at least two dimensions (H1) of said blank product (1); wherein said database (DB) comprises a remote server cloud connected to said thermoforming machine (100) by means of an Internet network; said thermoforming system comprising, in particular, a user terminal device (60) connected to said database (DB) and said thermoforming machine (100) and configured for enabling an operator of said thermoforming machine (100) to select said at least one start parameter (P1).

15. Thermoforming system according to any one of claims 11 to 14, wherein said forming means comprises: a forming mould on which a contact surface is obtained, said contact surface being arranged for imprinting the shape thereof on said article (1, 2, 3); fluid supplying means controllable to supply a fluid on said article (1, 2, 3) which has been heated; and suction means controllable to create vacuum between said article (1, 2, 3) and said contact surface to make said article (1, 2, 3) adhere to said contact surface.

## Patentansprüche

1. Thermoformverfahren zum Steuern einer Thermoformmaschine (100) zum Verarbeiten eines Artikels (1, 2, 3) aus thermoplastischem Material, das Verfahren umfassend:
a. Einstellen von mindestens einem Startparameter (P1), der mindestens eine Startparameter (P1) umfassend mindestens einen Parameter, der sich auf das Verarbeiten des Artikels (1, 2, 3) bezieht, wobei der Artikel (1, 2, 3) ein Rohprodukt (1) und/oder ein Zwischenprodukt (2) und/oder ein thermogeformtes Produkt (3) umfasst;
b. Schätzen von mindestens einem Betriebsparameter (P2) des Thermoformverfahrens basierend auf dem mindestens einen Startparameter (P1);
c. Berechnen von mindestens einem Steuerparameter (P3) zum Steuern der Thermoformmaschine (100) basierend auf dem mindestens einen Betriebsparameter (P2);
d. Erfassen von mindestens einem tatsächlichen Parameter (PR) des Thermoformverfahrens;
e. Vergleichen des mindestens einen tatsächlichen Parameters (PR), der erfasst wurde, mit dem mindestens einen Betriebsparameter (P2), der geschätzt wurde;
f. basierend auf dem Vergleichen, Modifizieren des mindestens einen Steuerparameters (P3);
wobei das Erfassen, das Vergleichen und das Modifizieren in einer zyklischen Sequenz erfolgen;
**dadurch gekennzeichnet, dass** der mindestens eine Startparameter (P1) mindestens einen Maschinenparameter umfasst und der mindestens eine Maschinenparameter eine Formgestalt (G10) umfasst, um das Zwischenprodukt (2) zu bedrucken.

2. Thermoformverfahren nach Anspruch 1, wobei der mindestens eine Startparameter (P1) mindestens einen Artikelparameter umfasst.

3. Thermoformverfahren nach Anspruch 2, wobei der mindestens eine Artikelparameter eine gewünschte Endgeometrie (G3) des thermogeformten Artikels (3) und/oder ein Material (M) des Artikels (1, 2, 3) und/oder mindestens eine Abmessung (H1) des Rohprodukts (1) umfasst; das Thermoformverfahren umfassend insbesondere einen Schritt eines Bereitstellens einer Datenbank (DB), die konfiguriert ist, um den mindestens einen Startparameters (P1) zu speichern, einschließlich zweier endgültiger gewünschter Geometrien (G3) des thermogeformten Produkts (3) und/oder mindestens zweier Formgestalten (G10), um den Zwischenartikel (2) zu bedrucken, und/oder mindestens zweier Materialien (M) des Artikels (1, 2, 3) und/oder mindestens zweier Abmessungen (H1) des Rohprodukts (1); das Thermoformverfahren umfassend insbesondere einen Schritt eines Verbindens der Datenbank (DB) mit der Thermoformmaschine (100), die Datenbank (DB) umfassend eine entfernte Server-Cloud, die mittels eines Internetnetzwerks mit der Thermoformmaschine (100) verbunden ist.

4. Thermoformverfahren nach einem der vorstehenden Ansprüche, wobei der Einstellungsschritt einen Schritt eines Auswählens des mindestens einen Startparameters (P1) über ein Benutzerendgerät (60) umfasst.

5. Thermoformverfahren nach einem der vorstehenden Ansprüche, wobei der mindestens eine Betriebsparameter (P2) eine simulierte Zwischengeometrie (GS2) des Zwischenprodukts (2) und eine entsprechende simulierte Temperaturverteilung (TS2) umfasst, die auf das Rohprodukt (1) anwendbar ist, um die simulierte Zwischengeometrie (GS2) zu erreichen, die simulierte Temperaturverteilung (TS2) umfassend mindestens einen simulierten Temperaturwert, der einem Bereich des Rohprodukts (1) und/oder des Zwischenprodukts (2) zugeordnet ist.

6. Thermoformverfahren nach einem der vorstehenden Ansprüche, umfassend das Erfassen von mindestens einem Umgebungsparameter in einer Arbeitsumgebung (W), in der sich die Thermoformmaschine (100) befindet, und das weitere Modifizieren des mindestens einen Steuerparameters (P3) basierend auf dem mindestens einen Umgebungsparameter.

7. Thermoformverfahren nach Anspruch 6, wobei der mindestens eine Umgebungsparameter einen Umgebungstemperaturwert und/oder einen Feuchtigkeitswert der Arbeitsumgebung (W) umfasst.

8. Thermoformverfahren nach einem der vorstehenden Ansprüche, umfassend einen Schritt eines Erwärmens des Artikels (1, 2, 3), der mindestens eine Steuerparameter (P3) umfassend einen Wert (PT) einer thermischen Leistung, der auf einem Bereich des Artikels (1, 2, 3) zur Verfügung zu stellen ist, und/oder eine Erwärmungszeit (TPT), der mindestens eine aktuelle Parameter (PR) umfassend einen aktuellen Temperaturwert (TR), der an dem Bereich erfasst wird.

9. Thermoformverfahren nach einem der vorstehenden Ansprüche, umfassend einen Schritt eines Gestaltens des Artikels (1, 2, 3) unter Druck durch Zurverfügungstellen eines unter Druck stehenden Fluids auf dem Artikel (1, 2, 3), der mindestens eine Steuerparameter (P3) umfassend einen Durchflussgeschwindigkeitswert (QF), der auf dem Artikel (1, 2, 3) zur Verfügung zu stellen ist, und/oder eine Zeit (TQF) des Zurverfügungstellens und/oder einen Fluiddruckwert (PF), der mindestens eine aktuelle Parameter (PR) umfassend eine aktuelle Position (X) eines Punkts des Artikels (1, 2, 3).

10. Thermoformverfahren nach einem der vorstehenden Ansprüche, umfassend das Gestalten des Artikels (1, 2, 3) unter Vakuum durch Verursachen, dass der Artikel (1, 2, 3) an einer Kontaktoberfläche der Thermoformmaschine (100) haftet, der mindestens eine Steuerparameter (P3) umfassend einen Vakuumwert, um auf den Artikel (1, 2, 3) angewendet zu werden, und/oder eine Vakuumzeit, der mindestens eine aktuelle Parameter (PR) umfassend eine aktuelle Position (X) eines Punkts des Artikels (1, 2, 3).

11. Thermoformsystem zum Produzieren eines Artikels (1, 2, 3) aus thermoplastischem Material, wobei der Artikel (1, 2, 3) einen Rohartikel (1) und/oder ein Zwischenprodukt (2) und/oder ein thermogeformtes Produkt (3) umfasst; das Thermoformsystem umfassend eine Thermoformmaschine (100), die zum Verarbeiten des Artikels (1, 2, 3) angeordnet ist, einschließlich:
- einer Vielzahl von Wärmeelementen (20), von denen jedes steuerbar ist, um einen Bereich des Artikels (1, 2, 3) zu erwärmen;
- eines Formgebungsmittels, das steuerbar ist, um dem erwärmten Artikel (1, 2, 3) eine Form zu geben; eines Erfassungsmittels (30, 40), das zum Erfassen von mindestens einem aktuellen Parameter (PR) des Artikels (1, 2, 3) konfiguriert ist;
- eines Steuermittels, das zum Steuern der Vielzahl von Wärmeelementen (20) und/oder des Formgebungsmittels durch mindestens einen Steuerparameter (P3) konfiguriert ist;
- eines Berechnungsmittels, das zum Schätzen mindestens eines Betriebsparameters (P2) basierend auf mindestens einem Startparameter (P1), zum Berechnen mindestens eines Steuerparameter (P3) basierend auf mindestens einem Betriebsparameter (P2), zum Vergleichen mindestens eines tatsächlichen Parameters (PR), der erfasst wurde, mit mindestens einem Betriebsparameter (P2), und Modifizieren mindestens einen Steuerparameters (P3) basierend auf dem Vergleich konfiguriert ist;
**dadurch gekennzeichnet, dass** es eine Datenbank (DB) umfasst, die mit der Thermoformmaschine (100) verbunden ist, wobei die Datenbank (DB) konfiguriert ist, um mindestens den Startparameter (P1) einschließlich mindestens zweier Formgestalten (G10) zu speichern, um den Artikel (1, 2, 3) zu bedrucken.

12. Thermoformsystem nach Anspruch 11 und umfassend ein Sensormittel (50), das zum Erfassen von mindestens einem Umgebungsparameter in einer Arbeitsumgebung (W) konfiguriert ist, in der sich die Thermoformmaschine (100) befindet, und wobei das Berechnungsmittel ferner zum weiteren Modifizieren des mindestens einen Steuerparameters (P3) basierend auf dem mindestens einen Umgebungsparameters konfiguriert ist.

13. Thermoformsystem nach Anspruch 12, wobei das Sensormittel (50) einen Temperaturfühler und/oder einen Feuchtigkeitsdetektor umfasst.

14. Thermoformsystem nach einem der Ansprüche 11 bis 13, umfassend eine Datenbank (DB), die konfiguriert ist, um den mindestens einen Startparameter (P1) einschließlich mindestens zweier gewünschter Geometrien (G3) des thermogeformten Produkts (3) und/oder mindestens zweier Materialien (M) des Artikels (1, 2, 3) und/oder mindestens zweier Abmessungen (H1) des Rohprodukts (1) zu speichern;
wobei die Datenbank (DB) eine entfernte Server-Cloud umfasst, die mittels eines Internetnetzwerks mit der Thermoformmaschine (100) verbunden ist; das Thermoformsystem umfassend insbesondere ein Benutzerendgerät (60), das mit der Datenbank (DB) und der Thermoformmaschine (100) verbunden ist, und das zum Ermöglichen, dass ein Betreiber der Thermoformmaschine (100) den mindestens einen Startparameter (P1) auswählt, konfiguriert ist.

15. Thermoformsystem nach einem der Ansprüche 11 bis 14, wobei das Formgebungsmittel umfasst: eine Formgebungsform, auf der eine Kontaktoberfläche erhalten wird, wobei die Kontaktoberfläche zum Drucken der Gestalt auf den Artikel (1, 2, 3) angeordnet ist; ein Fluidzuführmittel, das steuerbar ist, um ein Fluid auf dem Artikel (1, 2, 3) zur Verfügung zu stellen, der erwärmt wurde; und ein Saugmittel, das steuerbar ist, um zwischen dem Artikel (1, 2, 3) und der Kontaktoberfläche ein Vakuum zu erzeugen, um zu verursachen, dass der Artikel (1, 2, 3) an der Kontaktoberfläche haftet.

## Revendications

1. Procédé de thermoformage permettant de commander une machine de thermoformage (100) pour traiter un article (1, 2, 3) en matière thermoplastique, ledit procédé comprenant:
a. le réglage d'au moins un paramètre de départ (P1), ledit au moins un paramètre de départ (P1) comprenant au moins un paramètre qui est apparenté au traitement dudit article (1, 2, 3), dans lequel ledit article (1, 2, 3) comprend un produit vierge (1) et/ou un produit intermédiaire (2) et/ou un produit thermoformé (3);
b. l'estimation d'au moins un paramètre opérationnel (P2) dudit procédé de thermoformage en fonction dudit au moins un paramètre de départ (P1);
c. le calcul d'au moins un paramètre de commande (P3) pour commander ladite machine de thermoformage (100) en fonction dudit au moins un paramètre opérationnel (P2);
d. la détection d'au moins un paramètre réel (PR) dudit procédé de thermoformage;
e. la comparaison dudit au moins un paramètre réel (PR) qui a été détecté avec ledit au moins un paramètre opérationnel (P2) qui a été estimé;
f. en fonction de ladite comparaison, la modification dudit au moins un paramètre de commande (P3);
dans lequel ladite détection, ladite comparaison et ladite modification sont dans une séquence cyclique;
**caractérisé en ce que** ledit au moins un paramètre de départ (P1) comprend au moins un paramètre de machine et ledit au moins un paramètre de machine comprend un profil de moule (G10) à imprimer sur ledit produit intermédiaire (2).

2. Procédé de thermoformage selon la revendication 1, dans lequel ledit au moins un paramètre de départ (P1) comprend au moins un paramètre d'article.

3. Procédé de thermoformage selon la revendication 2, dans lequel ledit au moins un paramètre d'article comprend une géométrie finale souhaitée (G3) dudit article thermoformé (3) et/ou un matériau (M) dudit article (1, 2, 3) et/ou au moins une dimension (H1) dudit produit vierge (1) ; ledit procédé de thermoformage comprenant, en particulier, une étape de fourniture d'une base de données (DB) conçue pour enregistrer ledit au moins un paramètre de départ (P1) comportant au moins deux géométries finales souhaitées (G3) dudit produit thermoformé (3) et/ou au moins deux profils de moule (G10) à imprimer sur ledit article intermédiaire (2) et/ou au moins deux matériaux (M) dudit article (1, 2, 3) et/ou au moins deux dimensions (H1) dudit produit vierge (1) ; ledit procédé de thermoformage comprenant, en particulier, une étape de connexion de ladite base de données (BD) à ladite machine de thermoformage (100), ladite base de données (BD) comprenant un nuage de serveur distant connecté à ladite machine de thermoformage (100) au moyen d'un réseau Internet.

4. Procédé de thermoformage selon l'une quelconque des revendications précédentes, dans lequel ladite étape de réglage comprend une étape de sélection dudit au moins un paramètre de départ (P1) à travers un dispositif terminal utilisateur (60).

5. Procédé de thermoformage selon l'une quelconque des revendications précédentes, dans lequel ledit au moins un paramètre opérationnel (P2) comprend une géométrie intermédiaire simulée (GS2) dudit produit intermédiaire (2) et une distribution de température simulée (TS2) respective applicable audit produit vierge (1) pour réaliser ladite géométrie intermédiaire simulée (GS2), ladite distribution de température simulée (TS2) comprenant au moins une valeur de température simulée qui est associée à une zone dudit produit vierge (1) et/ou dudit produit intermédiaire (2).

6. Procédé de thermoformage selon l'une quelconque des revendications précédentes, comprenant la détection d'au moins un paramètre environnemental dans un environnement de travail (W) où ladite machine de thermoformage (100) est située, et en outre la modification dudit au moins un paramètre de commande (P3) en fonction dudit au moins un paramètre environnemental.

7. Procédé de thermoformage selon la revendication 6, dans lequel ledit au moins un paramètre environnemental comprend une valeur de température environnementale et/ou une valeur d'humidité dudit environnement de travail (W).

8. Procédé de thermoformage selon l'une quelconque des revendications précédentes, comprenant une étape de chauffage dudit article (1, 2, 3), ledit au moins un paramètre de commande (P3) comprenant une valeur de puissance thermique (PT) à apporter sur une zone dudit article (1, 2, 3) et/ou un temps de chauffage (TPT), ledit au moins un paramètre réel (PR) comprenant une valeur de température réelle (TR) détectée sur ladite zone.

9. Procédé de thermoformage selon l'une quelconque des revendications précédentes, comprenant une étape de profilage sous pression dudit article (1, 2, 3) en apportant un fluide pressurisé sur ledit article (1, 2, 3), ledit au moins un paramètre de commande (P3) comprenant une valeur de débit de fluide (QF) à apporter sur ledit article (1, 2, 3) et/ou un temps d'apport (TQF) et/ou une valeur de pression de fluide (PF), ledit au moins un paramètre réel (PR) comprenant une position réelle (X) d'un point dudit article (1, 2, 3).

10. Procédé de thermoformage selon l'une quelconque des revendications précédentes, comprenant le profilage sous vide dudit article (1, 2, 3) en faisant adhérer ledit article (1, 2, 3) à une surface de contact de ladite machine de thermoformage (100), ledit au moins un paramètre de commande (P3) comprenant une valeur de vide à appliquer sur ledit article (1, 2, 3) et/ou un temps de vide, ledit au moins un paramètre réel (PR) comprenant une position réelle (X) d'un point dudit article (1, 2, 3).

11. Système de thermoformage permettant de produire un article (1, 2, 3) en matière thermoplastique, dans lequel ledit article (1, 2, 3) comprend un article vierge (1) et/ou un produit intermédiaire (2) et/ou un produit thermoformé (3) ; ledit système de thermoformage comprenant une machine de thermoformage (100) agencée pour traiter ledit article (1, 2, 3), comportant:
- une pluralité d'éléments chauffants (20), chacun d'eux pouvant être commandé pour chauffer une zone dudit article (1, 2, 3);
- des moyens de formage pouvant être commandés pour former ledit article (1, 2, 3) qui a été chauffé ; des moyens de détection (30, 40) conçus pour détecter au moins un paramètre réel (PR) dudit article (1, 2, 3);
- des moyens de commande conçus pour commander ladite pluralité d'éléments chauffants (20) et/ou lesdits moyens de formage à travers au moins un paramètre de commande (P3);
- des moyens de calcul conçus pour estimer au moins un paramètre opérationnel (P2) en fonction d'au moins un paramètre de départ (P1), le calcul dudit au moins un paramètre de commande (P3) en fonction dudit au moins un paramètre opérationnel (P2) qui a été estimé, la comparaison dudit au moins un paramètre réel (PR) qui a été détecté avec ledit au moins un paramètre opérationnel (P2) et la modification dudit au moins un paramètre de commande (P3) en fonction de ladite comparaison;
**caractérisé en ce qu'**il comprend une base de données (DB) connectée à la machine de thermoformage (100), la base de données (DB) étant conçue pour enregistrer au moins un paramètre de départ (P1) comportant au moins deux profils de moule (G10) à imprimer sur ledit article (1, 2, 3).

12. Système de thermoformage selon la revendication 11, et comprenant des moyens de captage (50) conçus pour détecter au moins un paramètre environnemental dans un environnement de travail (W) où ladite machine de thermoformage (100) est située et lesdits moyens de calcul sont en outre conçus pour modifier en outre ledit au moins un paramètre de commande (P3) en fonction dudit au moins un paramètre environnemental.

13. Système de thermoformage selon la revendication 12, dans lequel ledit moyen de captage (50) comprend une sonde de température et/ou un détecteur d'humidité.

14. Système de thermoformage selon l'une quelconque des revendications 11 à 13, comprenant une base de données (DB) conçue pour enregistrer ledit au moins un paramètre de départ (P1) comportant au moins deux géométries souhaitées (G3) dudit produit thermoformé (3) et/ou au moins deux matériaux (M) dudit article (1, 2, 3) et/ou au moins deux dimensions (H1) dudit produit vierge (1);
dans lequel ladite base de données (DB) comprend un nuage de serveur distant connecté à ladite machine de thermoformage (100) au moyen d'un réseau Internet ; ledit système de thermoformage comprenant, en particulier, un dispositif terminal utilisateur (60) connecté à ladite base de données (DB) et à ladite machine de thermoformage (100) et conçu pour permettre à un opérateur de ladite machine de thermoformage (100) de sélectionner ledit au moins un paramètre de démarrage (P1).

15. Système de thermoformage selon l'une quelconque des revendications 11 à 14, dans lequel lesdits moyens de formage comprennent : un moule de formage sur lequel une surface de contact est obtenue, ladite surface de contact étant agencée pour imprimer le profil de celle-ci sur ledit article (1, 2, 3) ; des moyens d'apport de fluide pouvant être commandés pour apporter un fluide sur ledit article (1, 2, 3) qui a été chauffé ; et des moyens d'aspiration pouvant être commandés pour créer du vide entre ledit article (1, 2, 3) et ladite surface de contact afin de faire adhérer ledit article (1, 2, 3) à ladite surface de contact.
